# EUROPÄISCHE PATENTANMELDUNG

(11) **EP 3 444 054 A1**
(43) Veröffentlichungstag der Anmeldung: **20.02.2019**
(21) Anmeldenummer: 17186776.5
(22) Anmeldetag: 18.08.2017
(51) Int. Cl.: B23B 31/06

(54) **HANDFRÄSE MIT MUTTERNSCHLÜSSEL**

(71) Anmelder: HILTI Aktiengesellschaft, 9494 Schaan (LI)
(72) Erfinder: Möglich, Tobias, 80339 München (DE)
(74) Vertreter: Hilti Aktiengesellschaft Corporate Intellectual Property

(57) **Zusammenfassung**

Handfräse mit einem Gehäuse, einer Spindel und einer Spannmutter, die, als Teil einer Werkzeugaufnahme, zum Ein- und Ausspannen eines Fräswerkzeugs drehbar mit der Spindel verbindbar und von dieser lösbar ist, und wobei die Handfräse einen Mutternschlüssel aufweist, der bezogen auf die Spindel axial zwischen einer Eingriffsstellung und einer Freigabestellung bewegt werden kann, wobei der Mutternschlüssel in Eingriffsstellung die Spannmutter in Umfangsrichtung zumindest abschnittsweise formschlüssig umgreift, und wobei die Spannmutter, wenn der Mutternschlüssel in Freigabestellung befindlich ist, relativ zum Mutternschlüssel drehbar ist, wobei der Mutternschlüssel drehfest mit dem Gehäuse der Handfräse verbunden ist, so dass bei in Eingriffsstellung befindlichen Mutternschlüssel die Spannmutter durch manuelles Drehen der Spindel mit der Spindel verbindbar und von dieser lösbar ist.

## Beschreibung

Die vorliegende Erfindung betrifft eine Handfräse mit einem Gehäuse, einer Spindel und einer Spannmutter. Die Spannmutter ist, als Teil einer Werkzeugaufnahme, zum Ein- und Ausspannen eines Fräswerkzeugs drehbar mit der Spindel verbindbar und von dieser lösbar. Die Handfräse weist einen Mutternschlüssel auf, der bezogen auf die Spindel axial zwischen einer Eingriffsstellung und einer Freigabestellung bewegt werden kann, wobei der Mutternschlüssel in Eingriffsstellung die Spannmutter in Umfangsrichtung zumindest abschnittsweise formschlüssig umgreift. Die Spannmutter ist, wenn der Mutternschlüssel in Freigabestellung befindlich ist, relativ zum Mutternschlüssel drehbar.

Eine Handfräse der eingangs genannten Art ist aus der US-Patentschrift US 6,350,087 B1 grundsätzlich bekannt. Bei der in dieser Druckschrift beschriebenen Handfräse wird eine Spindel der Handfräse mittels eines Rastpins blockiert. Durch Drehen eines formschlüssig mit der Spannmutter verbindbaren Mutternschlüssels kann die Spannmutter von einer drehfest mit der Spindel verbundenen Werkzeugabnahme abgedreht werden.

Es ist Aufgabe der vorliegenden Erfindung, eine Handfräse mit einer alternativen Mutternschlüsselanordnung bereitzustellen. Insbesondere ist es Aufgabe der vorliegenden Erfindung, eine Handfräse bereitzustellen, die ein einhändiges Ein- und Ausspannen eines Fräswerkzeugs begünstigt.

Die Aufgabe wird dadurch gelöst, dass der Mutternschlüssel drehfest mit dem Gehäuse der Handfräse verbunden ist, sodass bei in Eingriffsstellung befindlichem Mutternschlüssel die Spannmutter durch manuelles Drehen der Spindel mit der Spindel verbindbar und von dieser lösbar ist.

Im Gegensatz zu der aus dem Stand der Technik bekannten Handfräse, bei der der Mutternschlüssel drehbar bezüglich des Gehäuses der Handfräse ist, ist bei der erfindungsgemäßen Handfräse vorgesehen, dass der Mutternschlüssel drehfest mit dem Gehäuse der Handfräse vorgesehen ist. Dementsprechend ist in Eingriffsstellung, das heißt, wenn die Spannmutter in Umfangsrichtung zumindest abschnittsweise formschlüssig durch den Mutternschlüssel umgriffen ist, auch die Spannmutter drehfest bezüglich des Gehäuses der erfindungsgemäßen Handfräse. Wird nun die Spindel der Handfräse manuell gedreht, das heißt, es erfolgt eine Drehung der Spindel relativ zum Gehäuse, kann die über ein Innengewinde verfügende Spannmutter, die über ein Außengewinde der Spindel an der Spindel aufgeschraubt ist, gelöst werden. Im Gegensatz zu der aus dem Stand der Technik bekannten Handfräse ist ein Blockieren der Spindel nicht erforderlich, sodass etwaige unerwünschte Querkräfte, die die Spindel schädigen können, nicht auftreten.

In einer besonders bevorzugten Ausgestaltung weist die Handfräse einen Spindelschlüssel auf, der, bezogen auf die Spindel, axial zwischen einer Blockierstellung und einer Losstellung bewegt werden kann. Vorzugsweise ist vorgesehen, dass der Spindelschlüssel in Blockierstellung ein an der Spindel ausgebildetes Formschlusselement, das vorzugsweise als Spindelmutter ausgebildet ist, in Umfangsrichtung zumindest abschnittsweise formschlüssig umgreift. Die Spindel kann, wenn der Spindelschlüssel in Losstellung befindlich ist, relativ zum Spindelschlüssel drehbar sein.

Es hat sich als vorteilhaft herausgestellt, wenn der in Blockierstellung befindliche Spindelschlüssel, um ein manuelles Drehen der Spindel zu ermöglichen, bezüglich des Gehäuses der Handfräse drehbar ist.

In einer besonders bevorzugten Ausgestaltung sind der Mutternschlüssel und der Spindelschlüssel axial gekoppelt, sodass ein Bewegen in die Eingriffsstellung gleichzeitig zu einem Bewegen in die Blockierstellung erfolgt und/oder ein Bewegen in die Freigabestellung gleichzeitig zu einem Bewegen in die Losstellung erfolgt.

Es hat sich als vorteilhaft herausgestellt, wenn die Handfräse werkzeugseitig eine Oberhülse und eine Unterhülse aufweist. Vorzugsweise weisen die Oberhülse und die Unterhülse jeweils eine Handbetätigungsfläche auf. Es ist ebenfalls bevorzugt, wenn die Oberhülse und die Unterhülse koaxial zur Spindel angeordnet sind.

In einer bevorzugten Ausgestaltung ist die Oberhülse drehbar mit dem Spindelschlüssel verbunden, sodass bei in Eingriffsstellung befindlichem Mutternschlüssel und in Blockierstellung befindlichem Spindelschlüssel, die Spannmutter durch manuelles Drehen der Oberhülse mit der Spindel verbindbar und von dieser lösbar ist.

Mit anderen Worten kann mittels der Oberhülse die innerhalb des Gehäuses verlaufende Spindel der Handfräse gedreht werden, wenn der Spindelschlüssel in Blockierstellung befindlich ist. Da wie bereits eingangs erwähnt der Spindelschlüssel in Blockierstellung vorzugsweise eine an der Spindel ausgebildete Spindelmutter formschlüssig umgreift, erfolgt eine optimale Kraftverteilung in Blockierstellung. Dies im Gegensatz zur punktuellen Krafteinwirkung eines auf die Spindel wirkenden Rastpins, wie er bei einer Handfräse des Standes der Technik vorgesehen ist.

In einer weiteren bevorzugten Ausgestaltung sind die Oberhülse und die Unterhülse drehbar zueinander gelagert. Vorzugsweise ist die Oberhülse in der Unterhülse gelagert. Ebenfalls bevorzugt ist die Oberhülse bezüglich der Unterhülse in axialer Richtung lagefest.

Es hat sich als vorteilhaft herausgestellt, wenn der Mutternschlüssel drehbar bezüglich des Spindelschlüssels und/oder sowohl drehbar bezüglich der Oberhülse als auch bezüglich der Unterhülse ist.

Die Oberhülse und der Spindelschlüssel können gemeinsam in axialer Richtung vom Gehäuse weg verschiebbar gelagert sein. Alternativ oder zusätzlich können die Oberhülse und der Spindelschlüssel drehbar mit dem Gehäuse der Handfräse verbunden sind.

In einer besonders bevorzugten Ausgestaltung weist die Handfräse eine Stellfeder auf, gegen deren Federkraft die Eingriffsstellung und/oder die Blockierstellung einzunehmen ist.

Vorzugsweise ist die Stellfeder, als zwischen Unterhülse und Gehäuse wirkende Zugfeder, innerhalb des Gehäuses der Handfräse angeordnet. Alternativ kann die Stellfeder, bezogen auf die axiale Richtung, zwischen dem Mutternschlüssel und dem Spindelschlüssel angeordnet sein. In diesem Fall wirkt die Stellfeder als Druckfeder, von deren Federkraft die Blockierstellung einzunehmen ist.

Es hat sich als vorteilhaft herausgestellt, wenn der Spindelschlüssel die Spindel dauerhaft umgreift.

Die Werkzeugaufnahme weist vorzugsweise eine Spannhülse auf, die koaxial zur Spindel anordenbar und betriebsmäßig mit der Spannmutter verbindbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein bevorzugtes Ausführungsbeispiel einer erfindungsgemäßen Handfräse in perspektivischer Darstellung;
- Fig. 2: das Ausführungsbeispiel der Fig. 1 in teilweiser Schnittdarstellung;
- Fig. 3: das Ausführungsbeispiel der Figuren 1 und 2 in teilweiser Schnittdarstellung, wobei der Mutternschlüssel in Freigabestellung befindlich ist;
- Fig. 4: das Ausführungsbeispiel der Fig. 3, wobei der Mutternschlüssel in Eingriffsstellung befindlich ist; und
- Fig. 5: das Ausführungsbeispiel der vorangehenden Figuren, wobei die Spannmutter von der Spindel abgedreht ist.

### Ausführungsbeispiel:

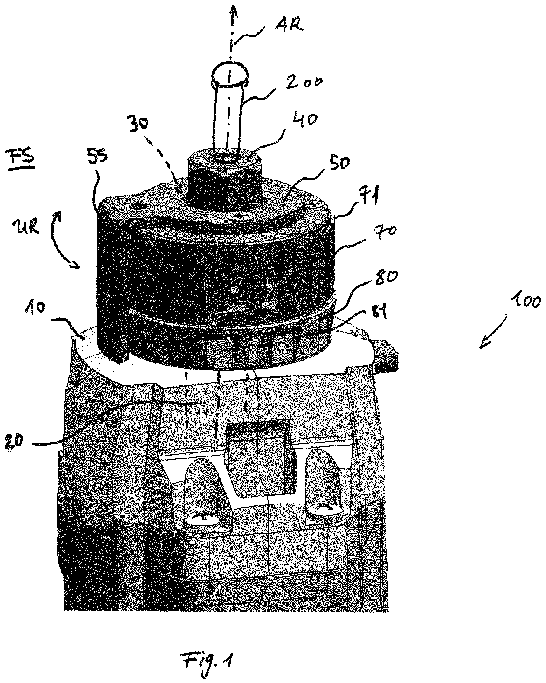

Eine erfindungsgemäße Handfräse 100 ist in Fig. 1 dargestellt. Die Handfräse 100 ist ausgestattet mit einem Gehäuse 10, einer innerhalb des Gehäuses 10 verlaufenden und daher hier gestrichelt dargestellten Spindel 20, und mit einer Spannmutter 40, die Teil einer Werkzeugaufnahme 30 mit Spannhülse (nicht dargestellt) ist. Die Spannmutter 40 ist zum Ein- und Ausspannen eines Fräswerkzeugs 200 drehbar mit der Spindel 20 verbindbar und von dieser lösbar. Sowohl die Spindel 20 als auch die Spannmutter 40 weisen ein zueinander korrespondierendes Gewinde auf, sodass die Spannmutter 40 auf die Spindel 20 aufgeschraubt bzw. von dieser durch Abschrauben gelöst werden kann.

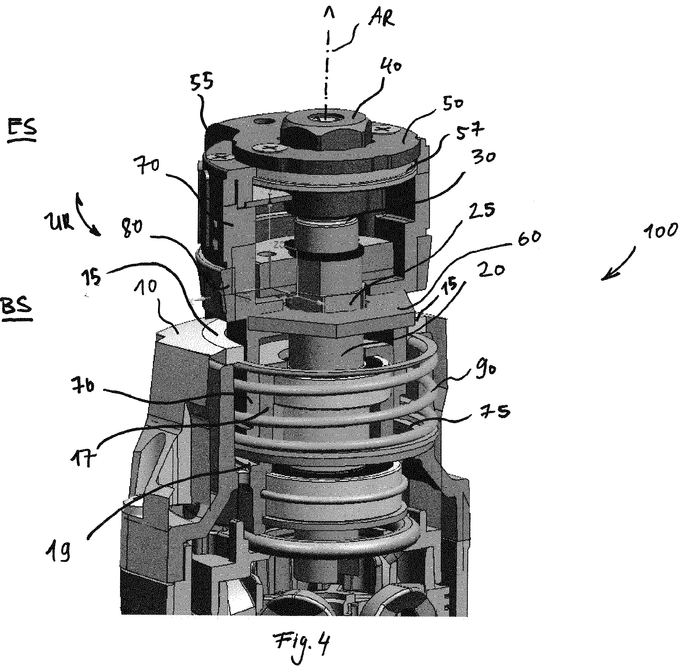

Die Handfräse 100 weist einen Mutternschlüssel 50 auf, der bezogen auf die Spindel 20 in axialer Richtung AR zwischen einer Freigabestellung FS (hier in Fig. 1 dargestellt) und einer Eingriffsstellung ES (siehe Fig. 4) bewegt werden kann.

Bei der Handfräse 100 der Fig. 1 ist der Mutternschlüssel 50 drehfest mit dem Gehäuse 10 der Handfräse 100 verbunden. Diese drehfeste Verbindung wird über einen Führungsarm 55 realisiert, der im vorliegend dargestellten Ausführungsbeispiel einteilig mit dem Mutternschlüssel 50 verbunden ist. Der Führungsarm 55 ist, bezogen auf die axiale Richtung AR relativ zum Gehäuse 10 der Handfräse 100 verschiebbar. Um die hier dargestellte Freigabestellung FS zu verlassen, kann der Führungsarm 55 demnach weiter aus dem Gehäuse 10 herausgeschoben werden, wobei der Führungsarm 55, bezogen auf die Umfangsrichtung UR stets drehfest zum Gehäuse 10 der Handfräse 100 verbleibt.

In dem in Fig. 1 dargestellten Ausführungsbeispiel weist die Spannmutter 40 eine Sechs-Kant-Kontur auf, wohingegen der Mutternschlüssel 50 nach Art eines Ringschlüssels eine Zwölf-Kant-Kontur aufweist. In der hier dargestellten Freigabestellung FS ist die Spannmutter 40 relativ zum Mutternschlüssel 50 drehbar, da Spannmutter 40 und Mutternschlüssel 50 nicht in Eingriff sind.

Sind hingegen Spannmutter 40 und Mutternschlüssel 50 in Eingriff, das heißt, wenn der Mutternschlüssel in Eingriffsstellung ES die Spannmutter 40 in Umfangsrichtung UR zumindest abschnittsweise, im vorliegenden Fall vollständig, formschlüssig umgreift (vgl. Fig. 4), ist die Spannmutter 40 in einer Drehung um die axiale Richtung AR festgesetzt. Durch manuelles Drehen der Spindel 20 kann die Spannmutter 40 von der Spindel 20 abgedreht bzw. auf diese aufgedreht werden.

Um den Mutternschlüssel 50 in axialer Richtung AR aus der hier gezeigten Freigabestellung FS in die Eingriffsstellung ES (vgl. Fig. 4) zu verbringen, weist die Handfräse 100 werkzeugseitig eine Unterhülse 80 auf, die koaxial zur Spindel 20 angeordnet ist und ihrerseits eine Handbetätigungsfläche 81 in Form von umfangsseitig verteilten Kerben aufweist. Durch Schieben der Unterhülse 80 in axialer Richtung AR wird gleichzeitig eine oberhalb der Unterhülse 80 befindliche werkzeugseitige Oberhülse 70 nach oben bewegt, wodurch auch der Mutternschlüssel 50 in axialer Richtung AR nach oben bewegt wird.

Durch Drehen der Oberhülse 70 in Umfangsrichtung kann die innerhalb des Gehäuses 10 der Handfräse 100 verlaufende Spindel 20 manuell in Drehung versetzt werden. Dies wird mit Bezug auf die folgenden Figuren genauer erläutert.

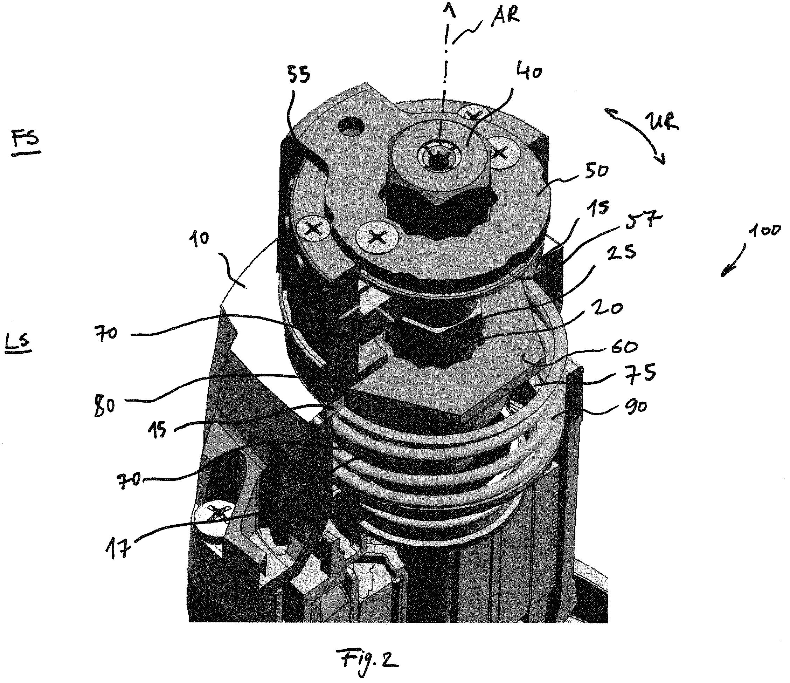

Fig. 2 zeigt nunmehr die Handfräse 100 der Fig. 1 in teilweiser Schnittdarstellung. Im oberen Teil der Fig. 2 gut zu erkennen ist der Mutternschlüssel 50, der über den angeformten Führungsarm 55 drehfest mit dem Gehäuse 10 der Handfräse verbunden ist. In Fig. 2 ist wiederum die Freigabestellung FS dargestellt, bei der der Mutternschlüssel 50 die Spannmutter 40 zwar umgreift, nicht allerdings einen Formschluss mit dieser bildet. Mit anderen Worten ist die Spannmutter 40 frei innerhalb des Mutternschlüssels 50 drehbar. Dies ist typischerweise der Fall im normalen Fräsbetrieb.

Unterhalb des Mutternschlüssels 50 weist die Handfräse 100 einen Spindelschlüssel 60 auf, der bezogen auf die Spindel 20, in axialer Richtung AR zwischen einer Blockierstellung BS (vgl. Fig. 4) und einer hier dargestellten Losstellung LS bewegt werden kann.

In Blockierstellung BS (vgl. Fig. 4) umgreift der Spindelschlüssel 60 ein an der Spindel 20 ausgebildetes Formschlusselement in Form einer Spindelmutter 25 in Umfangsrichtung UR formschlüssig. In der hier gezeigten Losstellung LS umgreift der Spindelschlüssel 60 die Spindel 20 dauerhaft, lediglich ohne einen Formschluss.

Im in Fig. 2 dargestellten bevorzugten Ausführungsbeispiel weist die Spindelmutter 25 eine Sechs-Kant-Kontur auf und der Spindelschlüssel 60 eine Zwölf-Kant-Kontur.

Gut zu erkennen in Fig. 2 ist, dass die bereits mit Bezug auf Fig. 1 erläuterte Oberhülse 70 drehfest mit dem Spindelschlüssel 60 verbunden ist. Der Spindelschlüssel 60 ist in die Oberhülse 70 formschlüssig eingebettet. Dafür weist der Spindelschlüssel 60 hier beispielhaft eine außenseitige Sechs-Kant-Kontur auf. Durch Drehen der Oberhülse in Umfangsrichtung UR wird dementsprechend der Spindelschlüssel 60 in Umfangsrichtung UR gedreht. Ist also der Spindelschlüssel in Blockierstellung BS befindlich (was in Fig. 4 dargestellt ist), so erfolgt durch manuelles Drehen des der Oberhülse 70 auch ein manuelles Drehen der Spindel 20 bezüglich des Gehäuses 10 in Umfangsrichtung UR.

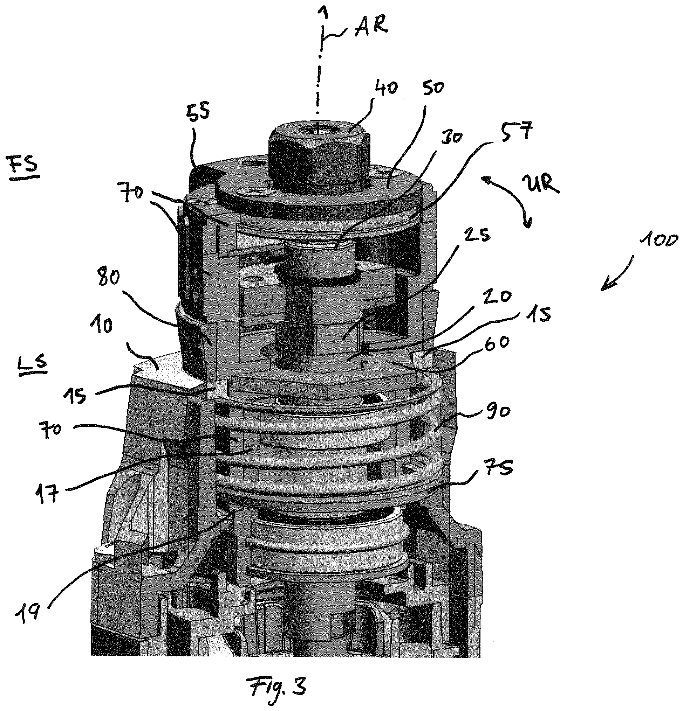

Der Mutternschlüssel 50 und der Spindelschlüssel 60 sind in axialer Richtung AR gekoppelt, sodass ein Bewegen des Spindelschlüssels 60 in die Blockierstellung BS (vgl. Fig. 4) gleichzeitig ein Bewegen des Mutternschlüssels 50 in die Eingriffsstellung ES (vgl. Fig. 4) bewirkt. Diese axiale Verkopplung soll nun mit Bezug auf Fig. 3 genauer erläutert werden.

Fig. 3 zeigt das Ausführungsbeispiel der Figuren 1 und 2 in teilweiser Schnittdarstellung aus einer anderen Perspektive. Die werkzeugseitig angeordnete Oberhülse 70 ist zylinderförmig ausgebildet und ist koaxial zur Spindel 20 als auch zur Unterhülse 80 angeordnet. Dabei ist die Oberhülse 70 teilweise innerhalb der Unterhülse 80 gelagert, wobei Oberhülse 70 und Unterhülse 80 zueinander drehbar sind.

Die Oberhülse 70 ist zylinderförmig abgestuft, wobei ein Teil der Oberhülse 70 innerhalb des Gehäuses 10 der Handfräse 100 verläuft. Die Unterhülse 80 verläuft ausschließlich außerhalb des Gehäuses 10 der Handfräse 100.

Wie der Fig. 3 entnommen werden kann, ist die Oberhülse 70 innerhalb des Gehäuses 10 auf einer Führungshülse 17 befindlich. In der hier dargestellten Freigabestellung FS bzw. Losstellung LS definiert die Führungshülse 17 gleichzeitig einen unteren Aufstand 19 für die Oberhülse 70. Die Oberhülse 70 kann in axialer Richtung AR entlang der Führungshülse 17 gleiten. Dies kann bewirkt werden durch ein Verbringen der Unterhülse 80 in axialer Richtung AR nach oben, wobei, wie der Fig. 3 zu entnehmen ist, die Oberhülse 70 und die Unterhülse 80 einen Formschluss in axialer Richtung AR dadurch bilden, dass die Oberhülse 70 in der Unterhülse 80 gelagert ist.

Im in Fig. 3 dargestellten Zustand sind die Oberhülse 70 und die Unterhülse 80 ebenfalls auf einem koaxial zur Spindel 20 angeordneten Stützring 15 des Gehäuses 10 abgestützt. Wie ebenfalls der Fig. 3 entnommen werden kann, ist der Mutternschlüssel 50 mit einem Führungsteller 57 verschraubt. Mutternschlüssel 50 und Führungsteller 57 sind bezüglich der Oberhülse 70 in Umfangsrichtung UR drehbar, wohingegen Mutternschlüssel 50 und Führungsteller 57, bezogen auf die axiale Richtung AR, einen Formschluss zur Oberhülse 70 aufweisen und derart axial mit dieser gekoppelt sind. Durch diese axiale Koppelung werden, bei einer Bewegung der Oberhülse 70 in axialer Richtung AR, die ihrerseits durch ein Hochschieben der Unterhülse 80 bewirkt wird, gleichzeitig der Spindelschlüssel 60 und der Mutternschlüssel 50 aus der hier dargestellten Freigabestellung FS bzw. Losstellung LS in die Eingriffsstellung ES bzw. Blockierstellung BS verbracht, was mit Bezug auf Fig. 4 dargestellt ist.

Zum Lösen der Spannmutter 40 von der Spindel 20 müssen die Oberhülse 70 und die Unterhülse 80 nach oben geschoben werden, was in Fig. 4 dargestellt ist. Durch die mit Bezug auf Fig. 3 beschriebene axiale Kopplung zwischen Oberhülse 70 und Unterhülse 80 gelangt der Mutternschlüssel 50 in einen formschlüssigen Umgriff zur Spannmutter 40 und gleichzeitig der Spindelschlüssel 60 in einen formschlüssigen Umgriff zur Spindelmutter 25.

Ein Anwender schiebt händisch die Unterhülse 80 zusammen mit der Oberhülse 70 gegen die Federkraft der Stellfeder 90 nach oben. Die Stellfeder 90 ist ihrerseits gegen einen Federaufstand 75, der in axialer Richtung AR lagefest zur Oberhülse 70 ist, und den lage- und drehfest innerhalb des Gehäuses 10 angeordneten Stützring 15 abgestützt.

Nunmehr kann die Oberhülse 70 gedreht werden, wodurch auch der drehfest zur Oberhülse 70 angeordnete Spindelschlüssel 60 in Drehung versetzt wird. Da der Spindelschlüssel 60, wie in Fig. 4 dargestellt, die Spindelmutter 25 formschlüssig umgreift, wird die Spindel 20 mitgedreht. Dadurch erfolgt eine relative Drehung der Spindel 20 zur Spannmutter 40, die ihrerseits durch den Mutternschlüssel 50 mit angeformtem Führungsarm 55 drehfest bezüglich des Gehäuses 10 gehalten wird.

Mit anderen Worten dreht sich die Spannmutter 40 der Werkzeugaufnahme 30 von der Spindel 20, weil der Mutternschlüssel 50 drehfest mit dem Gehäuse 10 verbunden ist und sich die Oberhülse 70 und die Unterhülse 80 relativ zum Gehäuse 10 drehen lassen, aber gleichzeitig die Oberhülse 70 über den Spindelschlüssel 60 mit der Spindel 20 verbunden ist.

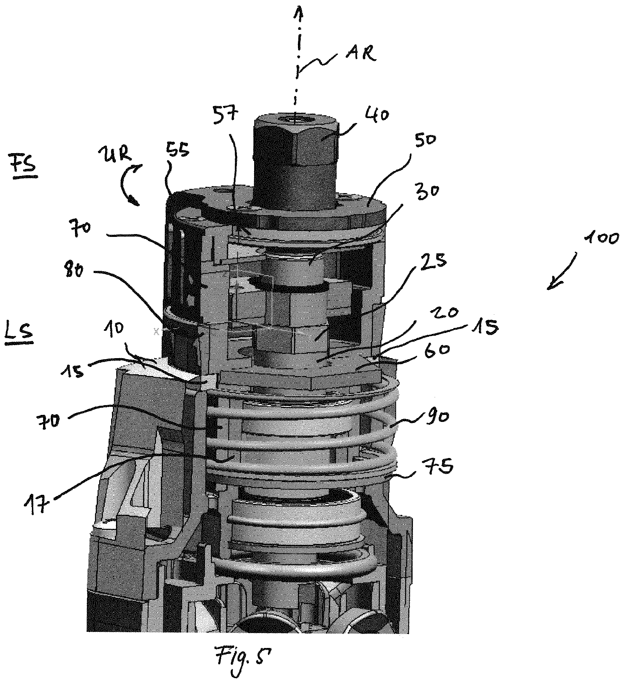

Fig. 5 zeigt schließlich den Zustand, in dem die Spannmutter 40 von der Spindel 20 abgeschraubt, das heißt gelöst ist. In einem nächsten Schritt kann die Spannmutter 40 entnommen werden. Der Anwender kann nunmehr die Unterhülse 80 loslassen, wobei diese, bewirkt durch die Federkraft der Stellfeder 90, in die in Fig. 5 gezeigte Position zurückverfällt.

Aus der Zusammenschau der Figuren 1 bis 5 wird deutlich, dass ein Spannvorgang mit etwas Übung einhändig erfolgen kann, wobei ein Benutzer zunächst mit Daumen und Zeigefinger die Unterhülse 80 zunächst in die ausgelegte Position (Fig. 4) verbringt und die Unterhülse dort beispielsweise mittels Ringfinger oder kleinem Finger hält. Nunmehr kann durch Daumen und Zeigefinger die Oberhülse 70 in Umfangsrichtung UR gedreht werden. In einer weiteren Ausgestaltung kann die Unterhülse 80 einen Rastmechanismus aufweisen, um diese vom Gehäuse 10 in axialer Richtung AR beabstandet zu halten. Dies kann beispielsweise durch eine hier nicht dargestellte Rastnase erfolgen, die innerhalb des Stützrings 15 verrastet wird.

### Bezugszeichenliste

- 10: Gehäuse
- 15: Stützring
- 17: Führungshülse
- 19: unterer Aufstand
- 20: Spindel
- 25: Spindelmutter
- 30: Werkzeugaufnahme
- 40: Spannmutter
- 50: Mutternschlüssel
- 55: Führungsarm
- 57: Führungsteller
- 60: Spindelschlüssel
- 70: Oberhülse
- 71: Handbetätigungsfläche
- 75: Federaufstand
- 80: Unterhülse
- 81: Handbetätigungsfläche
- 90: Stellfeder
- 100: Handfräse
- 200: Fräswerkzeug

- AR: axiale Richtung
- BS: Blockierstellung
- ES: Eingriffsstellung
- FS: Freigabestellung
- LS: Losstellung
- UR: Umfangsrichtung

## Patentansprüche

1. Handfräse (100) mit einem Gehäuse (10), einer Spindel (20) und einer Spannmutter (40), die, als Teil einer Werkzeugaufnahme (30), zum Ein- und Ausspannen eines Fräswerkzeugs (200) drehbar mit der Spindel (20) verbindbar und von dieser lösbar ist, und wobei die Handfräse (100) einen Mutternschlüssel (50) aufweist, der bezogen auf die Spindel (20) axial zwischen einer Eingriffsstellung (ES) und einer Freigabestellung (FS) bewegt werden kann, wobei der Mutternschlüssel (50) in Eingriffsstellung (ES) die Spannmutter (40) in Umfangsrichtung (UR) zumindest abschnittsweise formschlüssig umgreift, und wobei die Spannmutter (40), wenn der Mutternschlüssel (50) in Freigabestellung (FS) befindlich ist, relativ zum Mutternschlüssel (50) drehbar ist,
**dadurch gekennzeichnet, dass** der Mutternschlüssel (50) drehfest mit dem Gehäuse (10) der Handfräse (100) verbunden ist, so dass bei in Eingriffsstellung (ES) befindlichen Mutternschlüssel (50) die Spannmutter (40) durch manuelles Drehen der Spindel (20) mit der Spindel (20) verbindbar und von dieser lösbar ist.

2. Handfräse (100) nach Anspruch 1,
**dadurch gekennzeichnet, dass** die Handfräse (100) einen Spindelschlüssel (60) aufweist, der, bezogen auf die Spindel (20), axial zwischen einer Blockierstellung (BS) und einer Losstellung (LS) bewegt werden kann, wobei der Spindelschlüssel (60) in Blockierstellung (BS) ein an der Spindel (20) ausgebildetes Formschlusselement, das vorzugsweise als Spindelmutter (25) ausgebildet ist, in Umfangsrichtung (UR) zumindest abschnittsweise formschlüssig umgreift, und wobei die Spindel (20), wenn der Spindelschlüssel (60) in Losstellung (LS) befindlich ist, relativ zum Spindelschlüssel (60) drehbar ist.

3. Handfräse (100) nach Anspruch 2,
**dadurch gekennzeichnet, dass** der in Blockierstellung (BS) befindliche Spindelschlüssel (60), um ein manuelles Drehen der Spindel (20) zu ermöglichen, bezüglich des Gehäuses (10) der Handfräse (100) drehbar ist.

4. Handfräse (100) nach Anspruch 3 oder 4,
**dadurch gekennzeichnet, dass** der Mutternschlüssel (50) und der Spindelschlüssel (60) axial gekoppelt sind, so dass ein Bewegen in die Eingriffsstellung (ES) gleichzeitig zu einem Bewegen in die Blockierstellung (BS) erfolgt und/oder ein Bewegen in die Freigabestellung (FS) gleichzeitig zu einem Bewegen in die Losstellung (LS) erfolgt.

5. Handfräse (100) nach einem der vorangehenden Ansprüche,
**dadurch gekennzeichnet, dass** die Handfräse (100) werkzeugseitig eine Oberhülse (70) und eine Unterhülse (80) aufweist, die jeweils eine Handbetätigungsfläche (71, 81) aufweisen und koaxial zur Spindel (20) angeordnet sind.

6. Handfräse (100) nach Anspruch 5,
**dadurch gekennzeichnet, dass** die Oberhülse (70) drehfest mit dem Spindelschlüssel (60) verbunden ist, so dass bei in Eingriffsstellung (ES) befindlichen Mutternschlüssel (50) und/oder in Blockierstellung (BS) befindlichen Spindelschlüssel (60), die Spannmutter (40) durch manuelles Drehen der Oberhülse (70) mit der Spindel (20) verbindbar und von dieser lösbar ist.

7. Handfräse (100) nach Anspruch 5 oder 6,
**dadurch gekennzeichnet, dass** die Oberhülse (70) und die Unterhülse (80) drehbar zueinander gelagert sind, wobei die Oberhülse (70) vorzugsweise in der Unterhülse (80) gelagert und in axialer Richtung (AR) bezüglich dieser lagefest ist.

8. Handfräse (100) nach einem der Ansprüche 5 bis 7,
**dadurch gekennzeichnet, dass** der Mutternschlüssel (50) drehbar bezüglich des Spindelschlüssels (60) und/oder sowohl drehbar bezüglich der Oberhülse (70) als auch bezüglich der Unterhülse (80) ist.

9. Handfräse (100) nach einem der Ansprüche 5 bis 8,
**dadurch gekennzeichnet, dass** die Oberhülse (70) und der Spindelschlüssel (60) gemeinsam axialer Richtung vom Gehäuse (10) weg verschiebbar gelagert sind und/oder drehbar mit dem Gehäuse (10) der Handfräse (100) verbunden sind.

10. Handfräse (100) nach einem der Ansprüche 5 bis 9,
**dadurch gekennzeichnet, dass** Handfräse (100) eine Stellfeder (90) aufweist, gegen deren Federkraft die Eingriffsstellung (ES) und/oder die Blockierstellung (BS) einzunehmen ist.

11. Handfräse (100) nach Anspruch 10,
**dadurch gekennzeichnet, dass** die Stellfeder (90), als zwischen Unterhülse (80) und Gehäuse (10) wirkende Zugfeder, innerhalb des Gehäuses (10) der Handfräse (100) angeordnet ist.

12. Handfräse (100) nach einem der Ansprüche 2 bis 11,
**dadurch gekennzeichnet, dass** der Spindelschlüssel (60) die Spindel (20) dauerhaft umgreift.
